# EUROPEAN PATENT APPLICATION

(11) **EP 3 611 222 A1**
(43) Date of publication of application: **19.02.2020**
(21) Application number: 17905785.6
(22) Date of filing: 14.04.2017
(51) Int. Cl.: C08L 23/16, C08L 83/06, C08K 5/5415, C08K 3/00, C08K 5/01, C08J 3/24

(54) **ELASTOMER COMPOSITION, ELASTOMER, METHOD FOR USE IN PREPARING ELASTOMER AND ADHESIVE TAPE**

(71) Applicant: 3M Innovative Properties Company, St. Paul, MN 55133-3427 (US)
(72) Inventor: WANG, Yaming, Shanghai 200233 (CN); ZHOU, Wei, Shanghai 200233 (CN); LI, Wenyan, Shanghai 200233 (CN); HOU, Jingqiang, Shanghai 200233 (CN); JIN, Zhou, Shanghai 200233 (CN); GUAN, Zheng, Shanghai 200233 (CN)
(74) Representative: Mathys & Squire
(86) International application number: PCT/CN2017/080585
(87) International publication number: WO 2018/188077

(57) **Abstract**

The present disclosure provides an elastomer composition, comprising, based on the total weight 100 wt.% of the elastomer composition: 1-50 wt.% of a modified ethylene propylene copolymer; 5-60 wt.% of a first silicone resin, the first silicone resin comprising at least one selected from the group consisting of the following: a hydroxyl-terminated silicone resin and an alkoxy-terminated silicone resin; 0.1-15 wt.% of a first crosslinking agent; 0.1-15 wt.% of a catalyst; and 10-85 wt.% of a filler. The elastomer composition provided by the present disclosure at least can be co-crosslinked in low temperature (approximately -20°C to 60°C) conditions. An elastomer prepared from the elastomer composition provided by the present disclosure has good mechanical properties and electrical insulation properties.

## Description

### TECHNICAL FIELD

The present disclosure relates to an elastomer composition, an elastomer, a method for preparing an elastomer, and an adhesive tape.

### BACKGROUND

In the field of electric power, a cable is usually connected to a device or other cables by means of an electrical connector or a signal connector. However, if the connection between the cable and the device or the connection between the cable and other cables lacks sufficient protection, water or other substances may enter the interior of the electrical device, resulting in attenuation of the telecommunications transmission strength. In some technical solutions of the prior art, a protective adhesive tape is wound around the connection. However, due to the small distance between cable joints, winding of the protective adhesive tape is time-consuming and laborious. In some other technical solutions, the connection is coated with moisture-curable cement. However, since the rubber phase in such cement is incurable, the mechanical strength of the cured cement may be insufficient.

In addition, many irregular structural members in the field of electric power exist, such as cable clamps, busbars, and overhead lines. Due to the irregular shapes of these structural members, the conventional coatings or adhesive tapes are often difficult to be implemented to these structural members and provide protection for them. Therefore, some irregularly shaped electrical devices, such as insulated joint boxes, sheaths, and heat shrinkable tubes, may cause problems such as water leakage and aging due to lack of protection.

### SUMMARY

The present disclosure is directed at providing an elastomer composition that at least can be crosslinked in low temperature (approximately -20°C to 60°C) conditions. An elastomer prepared from the elastomer composition has good mechanical properties and electrical insulation properties.

An aspect of the present disclosure provides an elastomer composition, comprising, based on the total weight 100 wt.% of the elastomer composition: 1-50 wt.% of a modified ethylene propylene copolymer; 5-60 wt.% of a first silicone resin, the first silicone resin comprising at least one selected from the group consisting of the following: a hydroxyl-terminated silicone resin and an alkoxy-terminated silicone resin; 0.1-15 wt.% of a first crosslinking agent; 0.1-15 wt.% of a catalyst; and 10-85 wt.% of a filler.

According to some specific embodiments of the present disclosure, the elastomer composition comprises, based on the total weight 100 wt.% of the elastomer composition: 1-50 wt.% of the modified ethylene propylene copolymer; 5-60 wt.% of the first silicone resin, the first silicone resin comprising at least one selected from the group consisting of the following: a hydroxyl-terminated silicone resin and an alkoxy-terminated silicone resin; 0.1-15 wt.% of the first crosslinking agent; 0.1-10 wt.% of a second crosslinking agent, the second crosslinking agent comprising at least one selected from the group consisting of the following: benzoyl peroxide, benzoyl *tert*-butyl peroxide, methyl ethyl ketone peroxide, dicumyl peroxide, bis(2,4-dichlorobenzoyl) peroxide, and 2,5-dimethyl-2,5-bis(*tert*-butylperoxy)hexane; 0.1-15 wt.% of the catalyst; and 10-85 wt.% of the filler.

Another aspect of the present disclosure provides an elastomer, comprising crosslinking the elastomer composition provided by the present disclosure.

Another aspect of the present disclosure provides a method for preparing an elastomer, comprising a step of crosslinking the elastomer composition provided by the present disclosure.

Another aspect of the present disclosure provides an adhesive tape, comprising: a backing and the elastomer provided by the present disclosure and disposed at least at one side of the backing.

The elastomer composition provided by the present disclosure at least can be crosslinked in low temperature (approximately -20°C to 60°C) conditions. An elastomer prepared from the elastomer composition provided by the present disclosure has good mechanical properties and electrical insulation properties.

### BRIEF DESCRIPTION OF THE DRAWINGS

FIG. 1 shows a schematic structural diagram according to an adhesive tape according to a specific implementation scheme of the present disclosure; and
FIG. 2 shows a schematic structural diagram according to an adhesive tape according to another specific implementation scheme of the present disclosure.

### DETAILED DESCRIPTION

It should be appreciated that a person skilled in the art can devise various other implementation schemes based on the teachings of this Description and modify these without departing from the scope or spirit of the present disclosure. Therefore, the following particular embodiments have no limiting meaning.

Unless otherwise specified, all numbers used in this description and the claims representing the characteristic sizes and quantities and physical properties should be understood as being modified by the term "approximately" under any and all circumstances. Therefore, unless stated on the contrary, parameters in numerical values listed in the above description and in the attached claims are all approximate values, and one skilled in the art is capable of seeking to obtain desired properties by taking advantage of contents of the teachings disclosed herein, and changing these approximate values appropriately. The use of a numeric value range represented by endpoints includes all numbers within such range and any range within such range, e.g., 1 to 5 includes 1, 1.1, 1.3, 1.5, 2, 2.75, 3, 3.80, 4 and 5 etc.

### First Elastomer Composition

An aspect of the present disclosure provides a first elastomer composition, comprising, based on the total weight 100 wt.% of the first elastomer composition: 1-50 wt.% of a modified ethylene propylene copolymer; 5-60 wt.% of a first silicone resin, the silicone resin comprising at least one selected from the group consisting of the following: a hydroxyl-terminated silicone resin and an alkoxy-terminated silicone resin; 0.1-15 wt.% of a first crosslinking agent; 0.1-15 wt.% of a catalyst; and 10-85 wt.% of a filler. When the first elastomer composition provided by the present disclosure comprises the components of the contents described above, the first elastomer composition at least can be crosslinked in low temperature (approximately -20°C to 60°C) conditions, and a first elastomer prepared from the first elastomer composition has good mechanical properties and electrical insulation properties.

According to some specific embodiments, the modified ethylene propylene copolymer may have the following general formula: 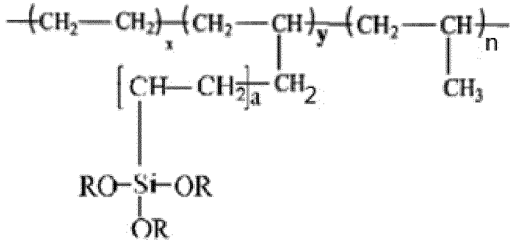 wherein each R respectively and independently represents one of the following substituted or unsubstituted groups: a C1-C12 alkyl group, a C2-C12 olefin, a C2-C12 alkynyl group, a C1-C12 alkoxy group, a C6-C12 aryl group, and a hydrogen atom, wherein x = 1-600000, y = 1-600000, a = 1-30000, and n = 1-600000; preferably x = 50000-200000, y = 50000-200000, a = 1000-10000, and n = 50000-200000;
or 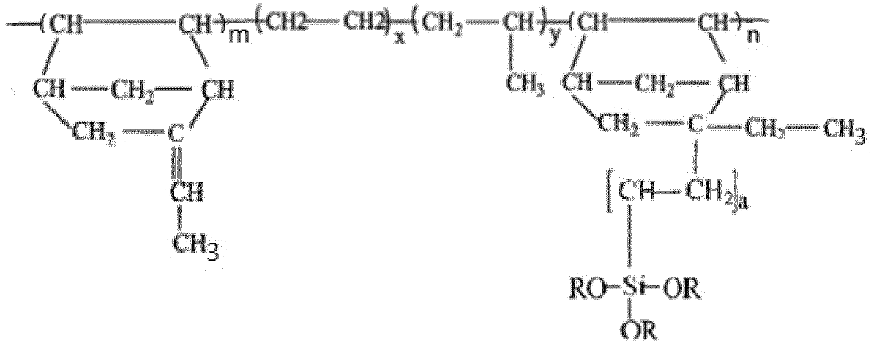 wherein each R respectively and independently represents one of the following substituted or unsubstituted groups: a C1-C12 alkyl group, a C2-C12 olefin, a C2-C12 alkynyl group, a C1-C12 alkoxy group, a C6-C12 aryl group, and a hydrogen atom, wherein x = 1-600000, y = 1-600000, n = 1-300000, m = 1-300000, and a = 1-30000; preferably x = 50000-200000, y = 50000-200000, n = 1-10000, m = 1-10000, and a = 100-10000;
or 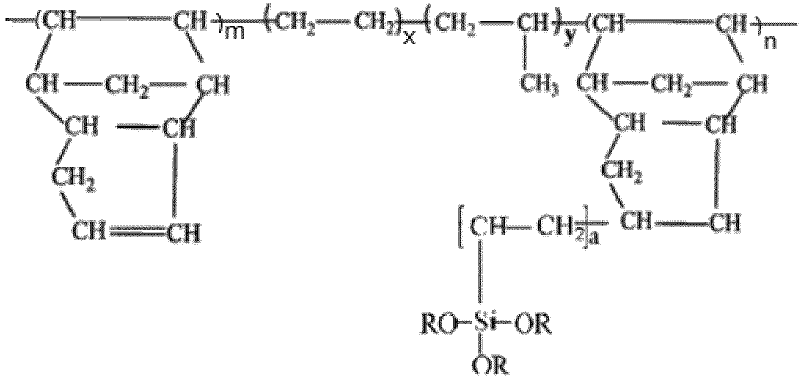 wherein each R respectively and independently represents one of the following substituted or unsubstituted groups: a C1-C12 alkyl group, a C2-C12 olefin, a C2-C12 alkynyl group, a C1-C12 alkoxy group, a C6-C12 aryl group, and a hydrogen atom, wherein x = 1-600000, y = 1-600000, n = 1-300000, m = 1-300000, and a = 1-30000; preferably x = 50000-200000, y = 50000-200000, n = 1-10000, m = 1-10000, and a = 100-10000;
or 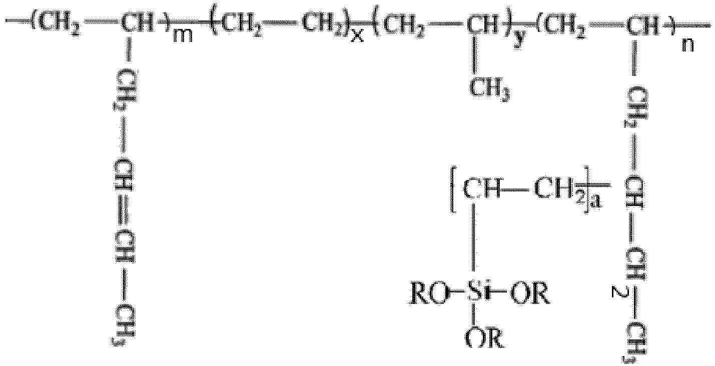 wherein each R respectively and independently represents one of the following substituted or unsubstituted groups: a C1-C12 alkyl group, a C2-C12 olefin, a C2-C12 alkynyl group, a C1-C12 alkoxy group, a C6-C12 aryl group, and a hydrogen atom, wherein x = 1-600000, y = 1-600000, n = 1-300000, m = 1-300000, and a = 1-30000; preferably x = 50000-200000, y = 50000-200000, n = 1-10000, m = 1-10000, and a = 100-10000.

According to some specific embodiments, the modified ethylene propylene copolymer may be a polymer obtained by means of graft modification of an ethylene propylene copolymer with a modifier.

According to some specific embodiments, the ethylene propylene copolymer may have the following general formula: 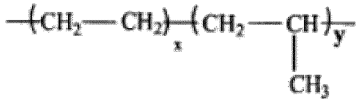 wherein x = 1-600000 and y = 1-600000, preferably x = 50000-200000 and y = 50000-200000; or 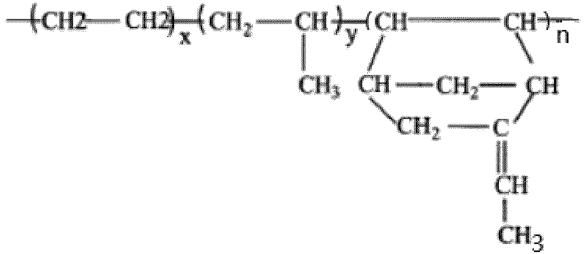 wherein x = 1-600000, y = 1-600000, and n = 1-300000, preferably x = 50000-200000, y = 50000-200000, and n = 1-10000;
or 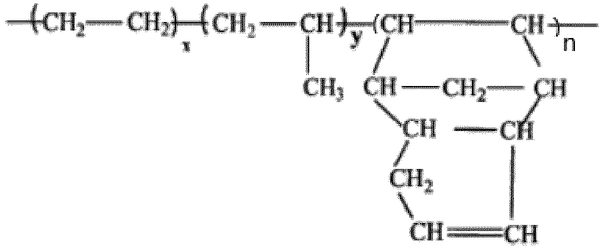 wherein x = 50000-200000, y = 50000-200000, and n = 1-10000;
or 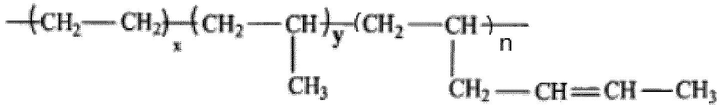 wherein x = 1-600000, y = 1-600000, and n = 1-300000, preferably x = 50000-200000, y = 50000-200000, and n = 1-10000.

According to some specific embodiments, the ethylene propylene copolymer may comprise at least one selected from the group consisting of the following: an ethylene propylene binary random copolymer, an ethylene propylene 1,1-ethylidene norbornene ternary random copolymer, an ethylene propylene dicyclopentadiene ternary random copolymer, and an ethylene propylene 1,4-hexadiene ternary random copolymer.

According to some specific embodiments, the modifier may comprise at least one selected from the group consisting of the following: vinyltrimethoxysilane, vinyltriethoxysilane, and γ-methacryloxypropyltrimethoxylsilane.

According to some specific embodiments, the first elastomer composition comprises, based on the total weight 100 wt.% of the first elastomer composition: 1-50 wt.% of the modified ethylene propylene copolymer, preferably 1-45 wt.%, more preferably 5-40 wt.%.

According to some specific embodiments, the first silicone resin comprises at least one selected from the group consisting of the following: a hydroxyl-terminated silicone resin and an alkoxy-terminated silicone resin.

According to some specific embodiments, the hydroxyl-terminated silicone resin may have the following general formula: 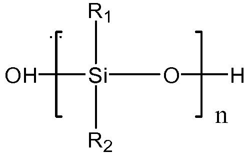 wherein R₁ and R₂ may be respectively a hydrogen atom, an alkyl group having 1-12 carbon atoms, an alkenyl group having 1-12 carbon atoms, an alkoxy group having 1-12 carbon atoms, or an aryl group having 6-12 carbon atoms, wherein n = 100-600000, preferably 1000-400000, and more preferably 10000-200000.

According to some specific embodiments, the hydroxyl-terminated silicone resin may be a hydroxyl-terminated polydimethylsiloxane.

According to some specific embodiments, the alkoxy-terminated silicone resin may have the following general formula: 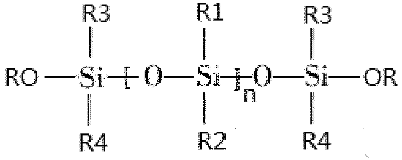 wherein R₁, R₂, R₃, and R₄ may be respectively and independently selected from a hydrogen atom, an alkyl group having 1-12 carbon atoms, an alkenyl group having 1-12 carbon atoms, an alkoxy group having 1-12 carbon atoms, and an aryl group having 6-12 carbon atoms; R is independently selected from a substituted or unsubstituted alkyl group having 1-12 carbon atoms, preferably an alkyl group having 1-10 carbon atoms, more preferably an alkyl group having 1-6 carbon atoms, particularly preferably a methyl group or an ethyl group; and n = 100-600000, preferably 1000-400000, and more preferably 10000-200000.

According to some specific embodiments, the alkoxy-terminated silicone resin may comprise at least one selected from the group consisting of the following: a methoxy-terminated silicone resin, an ethoxy-terminated silicone resin, and a silicone resin terminated by both a methoxy group and an ethoxy group.

According to some specific embodiments, the elastomer composition comprises, based on the total weight 100 wt.% of the first elastomer composition 5-60 wt.% of the first silicone resin.

According to some specific embodiments, the first crosslinking agent comprises at least one selected from the group consisting of the following: methyltriacetoxysilane, methyltrimethoxysilane, tris(isopropenyloxy)vinylsilane, methyltris(methylethylketoxime)silane, vinyltrimethoxysilane, vinyltriethoxysilane, γ-(2,3-epoxypropoxy)propyltrimethoxysilane, aminopropyltriethoxysilane, *N-*(β-aminoethyl)-γ-aminopropylmethylbimethoxysilane, 3-(2,3-epoxypropoxy)propyltrimethoxysilane, γ-mercaptopropyltriethoxysilane, γ-mercaptopropyltrimethoxysilane, methyltriethoxysilane, tetramethoxysilane, tetrapropoxysilane, tetraethoxysilane, and triacetoxyethylsilane.

According to some specific embodiments, the elastomer composition comprises, based on the total weight 100 wt.% of the first elastomer composition, 0.1-15 wt.% of the first crosslinking agent, preferably 1-10 wt.%.

According to some specific embodiments, the catalyst comprises at least one selected from the group consisting of the following: a titanium complex, dibutyltin diacetate, (triethoxysilylpropyl)tetramethylguanidine, dibutyltin dilaurate, and stannous octoate.

According to some specific embodiments, the elastomer composition comprises, based on the total weight 100 wt.% of the first elastomer composition, 0.1-15 wt.% of the catalyst, preferably 0.5-15 wt.%.

According to some specific embodiments, the filler comprises at least one selected from the group consisting of the following: ultrafine silica, fumed silica, silica aerogel, precipitated silica, diatomite, kaolin, montmorillonite, mica, wollastonite, iron oxide, titanium oxide, aluminum oxide, boron nitride, aluminum nitride, calcium carbonate, magnesium carbonate, zinc carbonate, asbestos, and fiberglass.

According to some specific embodiments, the elastomer composition comprises, based on the total weight 100 wt.% of the first elastomer composition, 10-85 wt.% of the filler.

According to some specific embodiments, the first elastomer composition may further comprise, based on the total weight 100 wt.% of the first elastomer composition, 0.5-20 wt.% of a second silicone resin, the second silicone resin comprising an MQ silicone resin. When the first elastomer composition further comprises the second silicone resin of the content, the first elastomer composition has good initial adhesion when not crosslinked.

According to some specific embodiments, the MQ silicone resin may be an organic silicone resin having the following general formula: 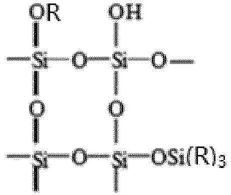 wherein each R respectively and independently represents one selected from the group consisting of the following: a methyl group and an ethyl group.

According to some specific embodiments, the first elastomer composition may further comprise, based on the total weight 100 wt.% of the first elastomer composition, 1-40 wt.% of a plasticizer. According to some specific embodiments, the plasticizer comprises at least one selected from the group consisting of the following: liquid polyisobutylene, liquid paraffin, naphthenic oil, and aromatic oil.

### Second Elastomer Composition

Another aspect of the present disclosure provides a second elastomer composition, comprising, based on the total weight 100 wt.% of the second elastomer composition: 1-50 wt.% of a modified ethylene propylene copolymer; 5-60 wt.% of a first silicone resin, the silicone resin comprising at least one selected from the group consisting of the following: a hydroxyl-terminated silicone resin and an alkoxy-terminated silicone resin; 0.1-15 wt.% of a first crosslinking agent; 0.1-15 wt.% of a catalyst; 10-85 wt.% of a filler; and 0.1-10 wt.% of a second crosslinking agent, the second crosslinking agent comprising at least one selected from the group consisting of the following: benzoyl peroxide, benzoyl tert-butyl peroxide, methyl ethyl ketone peroxide, dicumyl peroxide, bis(2,4-dichlorobenzoyl) peroxide, and 2,5-dimethyl-2,5-bis(*tert-*butylperoxy)hexane. When the second elastomer composition provided by the present disclosure comprises the components of the contents described above, the second elastomer composition not only can be crosslinked in low temperature (approximately -20°C to 60°C) conditions, but also can be further crosslinked in high temperature (approximately 60°C to 250°C) conditions; a second elastomer prepared from the second elastomer composition has good mechanical properties and electrical insulation properties.

According to some specific embodiments, for the modified ethylene propylene copolymer, the first silicone resin, the first crosslinking agent, the catalyst, and the filler contained in the second elastomer composition and the contents thereof, reference may be made to the modified ethylene propylene copolymer, the first silicone resin, the first crosslinking agent, the catalyst, and the filler contained in the first elastomer composition and the contents thereof.

According to some specific embodiments, the second elastomer composition may further comprise, based on the total weight 100 wt.% of the second elastomer composition, 0.5-20 wt.% of a second silicone resin, the second silicone resin comprising an MQ silicone resin. When the second elastomer composition further comprises the second silicone resin of the content, the second elastomer composition has good initial adhesion when not crosslinked.

According to some specific embodiments, the MQ silicone resin may be an organic silicone resin having the following general formula: 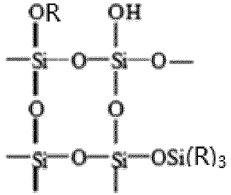 wherein each R respectively and independently represents one selected from the group consisting of the following: a methyl group and an ethyl group.

According to some specific embodiments, the second elastomer composition may further comprise, based on the total weight 100 wt.% of the second elastomer composition, 1-40 wt.% of a plasticizer. According to some specific embodiments, the plasticizer comprises at least one selected from the group consisting of the following: liquid polyisobutylene, liquid paraffin, naphthenic oil, and aromatic oil.

### First Elastomer

Another aspect of the present disclosure provides a first elastomer, comprising the crosslinked first elastomer composition provided by the present disclosure.

Regarding the description of each component of the first elastomer composition, reference may be made to the section "First Elastomer Composition" of the Description. Regarding the description of a method for preparing the first elastomer composition, reference may be made to the section "Method For Preparing First Elastomer Composition" of the Description.

### Second Elastomer

Another aspect of the present disclosure provides a second elastomer, comprising the crosslinked second elastomer composition provided by the present disclosure.

Regarding the description of each component of the second elastomer composition, reference may be made to the section "Second Elastomer Composition" of the Description. Regarding the description of a method for preparing the second elastomer composition, reference may be made to the section "Method For Preparing Second Elastomer Composition" of the Description.

### Method For Preparing First Elastomer Composition

Another aspect of the present disclosure provides a method for preparing the first elastomer, comprising a step of crosslinking the first elastomer composition provided by the present disclosure.

According to some specific embodiments, the components of the first elastomer composition provided by the present disclosure may be added into an internal mixer (for example, a model X(S)M-50 internal mixer available from Wuxi Double Elephant Rubber & Plastics Machinery Co., Ltd.) for mixing in conditions of approximately 35°C and approximately 1 atm, and the first elastomer is obtained after completion of crosslinking.

According to some specific embodiments, the components of the first elastomer composition may be added into the internal mixer for mixing in the following sequence: the hydroxyl-terminated silicone resin or alkoxy-terminated silicone resin, the modified ethylene propylene copolymer, the filler, the first crosslinking agent, and the catalyst, so as obtain the first elastomer after the completion of the crosslinking.

According to some specific embodiments, the second silicone resin may further be added between the addition of the filler and the addition of the first crosslinking agent.

Regarding the description of each component of the first elastomer composition and the content thereof, reference may be made to the section "First Elastomer Composition" of the Description.

### Method For Preparing Second Elastomer Composition

Another aspect of the present disclosure provides a method for preparing the second elastomer, comprising a step of crosslinking the second elastomer composition provided by the present disclosure.

According to some specific embodiments, first, the components of the second elastomer composition provided by the present disclosure may be added into an internal mixer (for example, a model X(S)M-50 internal mixer available from Wuxi Double Elephant Rubber & Plastics Machinery Co., Ltd.) for mixing in conditions of approximately 35°C and approximately 1 atm, and an intermediate of the second elastomer is obtained after completion of crosslinking at room temperature; then the intermediate of the second elastomer is crosslinked in conditions of approximately 155°C and approximately 1 atm, and the second elastomer is obtained after completion of the crosslinking.

According to some specific embodiments, first, the components of the second elastomer composition provided by the present disclosure may be added into the internal mixer (for example, a model X(S)M-50 internal mixer available from Wuxi Double Elephant Rubber & Plastics Machinery Co., Ltd.) for mixing in the conditions of approximately 35°C and approximately 1 atm in the following sequence: the hydroxyl-terminated silicone resin or alkoxy-terminated silicone resin, the modified ethylene propylene copolymer, the filler, the first crosslinking agent, the second crosslinking agent, and the catalyst, so as obtain the intermediate of the second elastomer after the completion of the crosslinking; then the intermediate of the second elastomer is crosslinked in the conditions of approximately 155°C and approximately 1 atm, so as obtain the second elastomer after the completion of the crosslinking.

According to some specific embodiments, the second silicone resin may further be added between the addition of the filler and the addition of the first crosslinking agent.

Regarding the description of each component of the second elastomer composition and the amount thereof, reference may be made to the section "Second Elastomer Composition" of the Description.

### Adhesive Tape

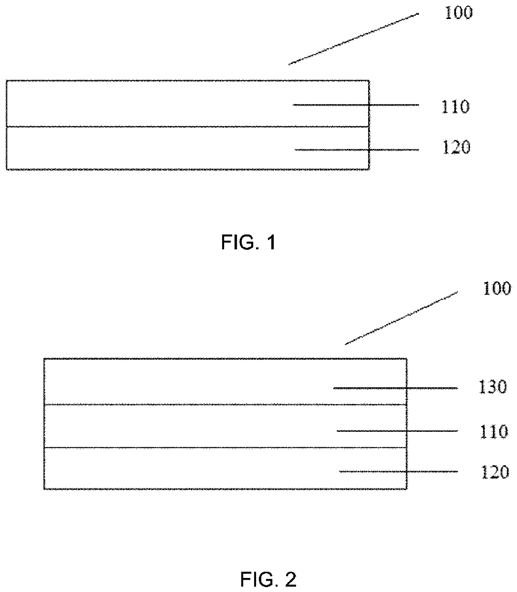

With reference to FIG. 1, another aspect of the present disclosure provides an adhesive tape 100, comprising a backing 110 and an elastomer 120 disposed at least at one side of the backing 110.

With reference to FIG. 2, according to some specific embodiments, , the adhesive tape 100 may further comprise an elastomer 130 disposed at the other side of the backing 110.

According to some specific embodiments, the backing 110 may be at least one selected from the group consisting of the following: a nonwoven fabric, a mesh cloth, a fiberglass cloth, a polyethylene terephthalate thin film, an organic silicon thin film, a fiber composite, and other laminates for reinforcement.

According to some specific embodiments, the elastomer 120 may be the first elastomer provided by the present invention, or may be the second elastomer provided by the present invention.

According to some specific embodiments, the elastomer 130 may be the first elastomer provided by the present invention, or may be the second elastomer provided by the present invention.

According to some specific embodiments, the adhesive tape may be prepared according to the following method comprising the following steps: first, with reference to the "Method For Preparing The First Elastomer" of the Description of the present disclosure, a first elastomer sheet having a thickness of approximately 2 mm is prepared, wherein when crosslinking of the first elastomer sheet is completed or partially completed, the first elastomer sheet having been subject to the crosslinking or partial crosslinking and a piece of backing are stacked up to obtain an intermediate; then, the intermediate is compacted by using a hydraulic press (for example, a YLX32-100 hydraulic press from Jiangsu Longxu Heavy Industry Machinery Co., Ltd. may be used) in room temperature conditions, so as to obtain the adhesive tape comprising one layer of the first elastomer and one layer of the backing.

According to some specific embodiments, the adhesive tape may be prepared according to the following method, which comprises the following steps: first, with reference to the "Method For Preparing The Second Elastomer" of the Description of the present disclosure, a second elastomer sheet having a thickness of approximately 2 mm is prepared, wherein when crosslinking of the second elastomer sheet is completed or partially completed, the second elastomer sheet having been subject to the crosslinking or partial crosslinking and a piece of backing are stacked up to obtain an intermediate; then, the intermediate is compacted by using a hydraulic press (for example, a YLX32-100 hydraulic press from Jiangsu Longxu Heavy Industry Machinery Co., Ltd. may be used) in room temperature conditions, so as to obtain the adhesive tape comprising one layer of the second elastomer and one layer of the backing.

According to some specific embodiments, the adhesive tape may be further prepared according to the following method, which comprises the following steps: first, with reference to the "Method For Preparing The First Elastomer" of the Description of the present disclosure, two first elastomer sheets each having a thickness of approximately 2 mm are prepared, wherein when crosslinking of the two first elastomer sheets is completed or partially completed, the two first elastomer sheets having been subject to the crosslinking or partial crosslinking and a piece of backing are stacked up such that the backing is located between the two first elastomer sheets, so as to obtain an intermediate; then, the intermediate is compacted by using a hydraulic press (for example, a YLX32-100 hydraulic press from Jiangsu Longxu Heavy Industry Machinery Co., Ltd. may be used) in room temperature conditions, so as to obtain the adhesive tape comprising one layer of the first elastomer, one layer of the backing, and one layer of the first elastomer.

According to some specific embodiments, an adhesive tape comprising one layer of the second elastomer, one layer of the backing, and one layer of the second elastomer may also be prepared by means of a similar method.

According to some specific embodiments, an adhesive tape comprising one layer of the second elastomer, one layer of the backing, and one layer of the first elastomer may also be prepared by means of a similar method.

The tape provided by the present disclosure can be conveniently used to wrap an object having an irregular shape, particularly irregularly shaped overhead line clamps, metal conductor connections, and joints of electrical devices without being easily pierced; further, the adhesive tape has good tensile strength, tear strength, and electrical insulation properties.

The following particular embodiments intend to explain the present disclosure exemplarily rather than restrictively.

Specific Embodiment 1 is an elastomer composition, comprising, based on the total weight 100 wt.% of the elastomer composition: 1-50 wt.% of a modified ethylene propylene copolymer; 5-60 wt.% of a first silicone resin, the silicone resin comprising at least one selected from the group consisting of the following: a hydroxyl-terminated silicone resin and an alkoxy-terminated silicone resin; 0.1-15 wt.% of a first crosslinking agent; 0.1-15 wt.% of a catalyst; and 10-85 wt.% of a filler.

Specific Embodiment 2 is the elastomer composition described in Specific Embodiment 1, wherein the modified ethylene propylene copolymer has the following general formula: 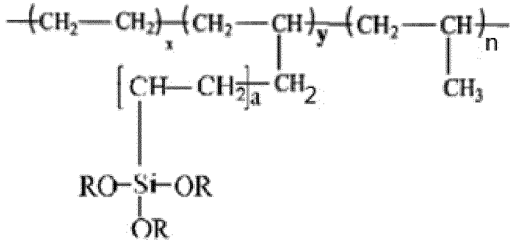 wherein each R respectively and independently represents one of substituted or unsubstituted groups comprising a C1-C12 alkyl group, a C2-C12 olefin, a C2-C12 alkynyl group, a C1-C12 alkoxy group, a C6-C12 aryl group, and a hydrogen atom, wherein x = 1-600000, y = 1-600000, n = 1-600000, and a = 1-30000;
or 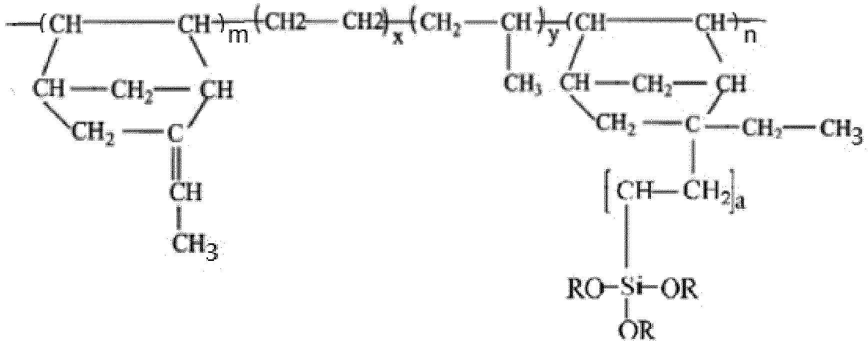 wherein each R respectively and independently represents one of substituted or unsubstituted groups comprising a C1-C12 alkyl group, a C2-C12 olefin, a C2-C12 alkynyl group, a C1-C12 alkoxy group, a C6-C12 aryl group, and a hydrogen atom, wherein x = 1-600000, y = 1-600000, m = 1-300000, n = 1-600000, and a = 1-30000;
or 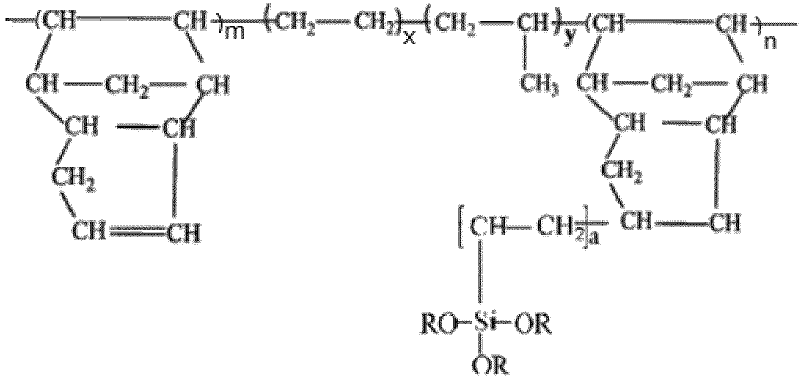 wherein each R respectively and independently represents one of substituted or unsubstituted groups comprising a C1-C12 alkyl group, a C2-C12 olefin, a C2-C12 alkynyl group, a C1-C12 alkoxy group, a C6-C12 aryl group, and a hydrogen atom, wherein x = 1-600000, y = 1-600000, m = 1-300000, n = 1-600000, and a = 1-30000;
or 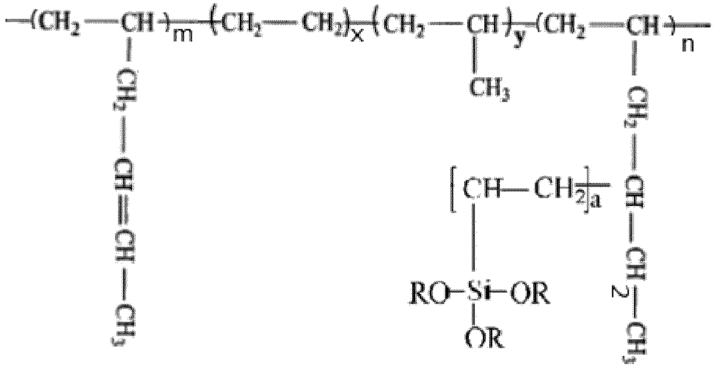 wherein each R respectively and independently represents one of substituted or unsubstituted groups comprising a C1-C12 alkyl group, a C2-C12 olefin, a C2-C12 alkynyl group, a C1-C12 alkoxy group, a C6-C12 aryl group, and a hydrogen atom, wherein x = 1-600000, y = 1-600000, n = 1-300000, and a = 1-30000.

Specific Embodiment 3 is the elastomer composition described in Specific Embodiment 1 or 2, wherein the modified ethylene propylene copolymer is a polymer obtained by means of graft modification of an ethylene propylene copolymer with a modifier; the ethylene propylene copolymer comprises at least one selected from the group consisting of the following: an ethylene propylene binary random copolymer, an ethylene propylene 1,1-ethylidene norbornene ternary random copolymer, an ethylene propylene dicyclopentadiene ternary random copolymer, and an ethylene propylene 1,4-hexadiene ternary random copolymer; and the modifier comprises at least one selected from the group consisting of the following: vinyltrimethoxysilane, vinyltriethoxysilane, and γ-methacryloxypropyltrimethoxylsilane.

Specific Embodiment 4 is the elastomer composition described in any one of Specific Embodiments 1 to 3, wherein the content of the modified ethylene propylene copolymer is 5-45 wt.%.

Specific Embodiment 5 is the elastomer composition described in any one of Specific Embodiments 1 to 4, wherein the content of the first silicone resin is 10-50 wt.%.

Specific Embodiment 6 is the elastomer composition described in any one of Specific Embodiments 1 to 5, wherein the first crosslinking agent comprises at least one selected from the group consisting of the following: methyltriacetoxysilane, methyltrimethoxysilane, tris(isopropenyloxy)vinylsilane, methyltris(methylethylketoxime)silane, vinyltrimethoxysilane, vinyltriethoxysilane, γ-(2,3-epoxypropoxy)propyltrimethoxysilane, aminopropyltriethoxysilane, *N*-(β-aminoethyl)-γ-aminopropylmethylbimethoxysilane, 3-(2,3-epoxypropoxy)propyltrimethoxysilane, γ-mercaptopropyltriethoxysilane, γ-mercaptopropyltrimethoxysilane, methyltriethoxysilane, tetramethoxysilane, tetrapropoxysilane, tetraethoxysilane, and triacetoxyethylsilane.

Specific Embodiment 7 is the elastomer composition described in any one of Specific Embodiments 1 to 6, wherein the catalyst comprises at least one selected from the group consisting of the following: a titanium complex, dibutyltin diacetate, (trimethoxysilylpropyl)tetramethylguanidine, dibutyltin dilaurate, and stannous octoate.

Specific Embodiment 8 is the elastomer composition described in any one of Specific Embodiments 1 to 7, wherein the filler comprises at least one selected from the group consisting of the following: silica, diatomite, kaolin, montmorillonite, mica, wollastonite, iron oxide, titanium oxide, aluminum oxide, boron nitride, aluminum nitride, calcium carbonate, magnesium carbonate, zinc carbonate, asbestos, and fiberglass.

Specific Embodiment 9 is the elastomer composition described in any one of Specific Embodiments 1 to 8, wherein the elastomer composition further comprises, based on the total weight 100 wt.% of the elastomer composition: 0.1-10 wt.% of a second crosslinking agent, the second crosslinking agent comprising at least one selected from the group consisting of the following: benzoyl peroxide, benzoyl tert-butyl peroxide, methyl ethyl ketone peroxide, dicumyl peroxide, bis(2,4-dichlorobenzoyl) peroxide, and 2,5-dimethyl-2,5-bis(*tert*-butylperoxy)hexane.

Specific Embodiment 10 is the elastomer composition described in any one of Specific Embodiments 1 to 9, wherein the elastomer composition further comprises, based on the total weight 100 wt.% of the elastomer composition: 0.5-20 wt.% of a second silicone resin, the second silicone resin comprising an MQ silicone resin.

Specific Embodiment 11 is the elastomer composition described in any one of Specific Embodiments 1 to 10, wherein the elastomer composition further comprises, based on the total weight 100 wt.% of the elastomer composition: 0.1-10 wt.% of a plasticizer, the plasticizer comprising at least one selected from the group consisting of the following: liquid polyisobutylene, liquid paraffin, naphthenic oil, and aromatic oil.

Specific Embodiment 12 is an elastomer, comprising the crosslinked elastomer composition described in any one of Specific Embodiments 1 to 11.

Specific Embodiment 13 is a method for preparing an elastomer, comprising a step of crosslinking the elastomer composition described in any one of Specific Embodiments 1 to 11.

Specific Embodiment 14 is an adhesive tape, comprising a backing and the elastomer provided by Specific Embodiment 12 and disposed at least at one side of the backing.

Specific Embodiment 15 is the adhesive tape described in Specific Embodiment 14, further comprising the elastomer provided by Specific Embodiment 12 and disposed at the other side of the backing.

### Embodiments

Embodiments and Comparative examples provided hereinafter facilitate the understanding of the present invention, and should not be constructed as limiting the scope of the present invention. Unless otherwise indicated, all parts and percentages used herein are by weight.

The raw materials used in the embodiments and comparative examples of the present invention are shown in Table 1a and Table 1b below, wherein Table 1a comprises raw materials for preparing the modified ethylene propylene copolymer (modified EPDM), and Table 1b comprises components of the elastomer composition.

**Table 1a Raw Materials For Preparing Modified Ethylene Propylene Copolymer (Modified EPDM)**

| **Component** | **Trade Name** | **Chemical Name** | **Supplier** |
|---|---|---|---|
| **Ethylene propylene copolymer** | Keltan 2470L (EPDM) | Ethylene propylene diene monomer | Lanxess Chemical Co., Ltd. |
| **Filler** | Aerosil 8200 | Fumed silica | Evonik Industries AG |
| **Crosslinking agent** | BPO | Benzoyl peroxide | Akzo Nobel N.V. |
| **Modifier** | RBB2210-30 | Vinylsiloxane rubber | Dow Corning Co., Ltd. |
| **Modifier** | A171 | Vinyltrimethoxysilane | Union Carbide Corporation |
| **Modifier** | A151 | Vinyltrimethoxysilane | Union Carbide Corporation |
| **Modifier** | KH570 | γ-methacryloxypropyltrimethoxylsilane | Union Carbide Corporation |
| **Plasticizer** | 6110 | Paraffin oil | Nanjing Honghan Petrochemical Co., Ltd. |

**Table 1b Components Of Elastomer Composition**

| **Component** | **Trade Name** | **Chemical Name** | **Supplier** |
|---|---|---|---|
| **First silicone resin** | Hydroxyl-terminated silicone resin | Hydroxyl-terminated silicone resin | Blue Star Organic Silicon Co., Ltd. |
| **Ethylene propylene copolymer** | Keltan 2470L (EPDM) | Ethylene propylene diene monomer | Lanxess Chemical Co., Ltd. |
| **Filler** | Aerosil 8200 | Fumed silica | Evonik Industries AG |
| **Catalyst** | D62 | Phthalate coupling agent | Hubei Xinlantian Co., Ltd. |
| **First crosslinking agent** | D20 | Methyltrimethoxysilane | Hubei Xinlantian Co., Ltd. |
| **Second crosslinking agent** | BPO | Benzoyl peroxide | Akzo Nobel N.V. |
| **Filler** | N550 | Carbon black | Cabot Chemical Co., Ltd. |
| **Filler** | CaCO3 | Calcium carbonate | Kunshan Katie Chemical Co., Ltd. |
| **Modifier** | RBB2210-30 | Vinylsiloxane rubber | Dow Corning Co., Ltd. |
| **First crosslinking agent** | A171 | Vinyltrimethoxysilane | Union Carbide Corporation |
| **First crosslinking agent** | A151 | Vinyltrimethoxysilane | Union Carbide Corporation |
| **First crosslinking agent** | KH570 | γ-methacryloxypropyltrimethoxylsilane | Union Carbide Corporation |
| **Plasticizer** | 6110 | Paraffin oil | Nanjing Honghan Petrochemical Company |

### Preparing Method

The first elastomer is obtained by crosslinking the elastomer composition provided by the present disclosure at a low temperature (approximately -20°C to 60°C, preferably approximately 35°C).

The intermediate of the second elastomer is obtained by crosslinking the second elastomer composition provided by the present disclosure at a low temperature (approximately -20°C to 60°C, preferably approximately 35°C), and the second elastomer is obtained by crosslinking the intermediate at a high temperature (approximately 60°C to 250°C, preferably approximately 155°C).

### Preparation Of First Elastomer

The components (as shown in Table 3 and Table 4) of the first elastomer composition provided by the present disclosure are added into a model X(S)M-50 internal mixer (available from Wuxi Double Elephant Rubber & Plastics Machinery Co., Ltd.) in the conditions of approximately 35°C and approximately 1 atm in the following sequence: the hydroxyl-terminated silicone resin or alkoxy-terminated silicone resin, the modified ethylene propylene copolymer, the filler, the first crosslinking agent, and the catalyst; the components are mixed well, the resultant mixture is molded into a desired shape by means of extrusion, and the first elastomer is obtained after crosslinking of the mixture.

Preferably, the second silicone resin may be further added between the addition of the filler and the addition of the first crosslinking agent.

### Preparation Of Second Elastomer

The components (as shown in Table 5) of the second elastomer composition provided by the present disclosure are added into a model X(S)M-50 internal mixer (available from Wuxi Double Elephant Rubber & Plastics Machinery Co., Ltd.) in the conditions of approximately 35°C and approximately 1 atm in the following sequence: the hydroxyl-terminated silicone resin or alkoxy-terminated silicone resin, the modified ethylene propylene copolymer, the filler, the first crosslinking agent, the second crosslinking agent, and the catalyst; the components are mixed well, the resultant mixture is molded into a desired shape by means of extrusion, and the intermediate of the second elastomer is obtained after crosslinking of the mixture; then the intermediate of the second elastomer is crosslinked in the conditions of approximately 155 °C and approximately 1 atm, and the second elastomer is obtained after completion of the crosslinking.

Preferably, the second silicone resin may be further added between the addition of the filler and the addition of the first crosslinking agent.

### Test Methods

In the present disclosure, the mechanical properties and electrical insulation properties of the first elastomer are tested respectively by means of the "tensile strength test", the "tear strength test", and the "breakdown voltage test."

In the present disclosure, the mechanical properties and electrical insulation properties of the intermediate of the second elastomer and the second elastomer are respectively tested by means of the "tensile strength test", the "tear strength test", and the "breakdown voltage test."

In the present disclosure, the initial adhesion of the non-crosslinked first elastomer composition and the non-crosslinked second elastomer composition is respectively measured by means of a chute-rolling ball method.

### Tensile Strength Test

This test is carried out in accordance with the test standard ASTM D 412-1998A.

When measured tensile strength is greater than or equal to 0.5 MPa, it is indicated that the tensile strength of the first elastomer, the second elastomer, or the intermediate of the second elastomer under test is good.

### Tear Strength Test

This test is carried out in accordance with the test standard ASTM D 412-1998A.

When measured tear strength is greater than or equal to 4 N/mm, it is indicated that the tear strength of the first elastomer, the second elastomer, or the intermediate of the second elastomer under test is good.

### Initial Adhesion Test

This test is carried out in accordance with the PSTC-6 method. During the test, a steel ball having a diameter D of 1.11 cm rolls down from the top of an inclined board having a height h of 6.51 cm and an angle α (α = 21° 30') with a horizontal line, and stops due to adhesive blocking of the non-crosslinked first elastomer composition or the non-crosslinked second elastomer composition. A distance L, measured in mm, that the steel ball moves on an adhesive tape is a measure of the initial adhesion properties of the adhesive tape.

When a test result is less than 120 mm, it is indicated that the initial adhesion of the non-crosslinked first elastomer composition or the non-crosslinked second elastomer composition is good.

### Breakdown Voltage Test

This test is carried out in accordance with the international standard IEC 156:1995.

When a measured breakdown voltage is 13 Kv/mm, it is indicated that insulativity of the first elastomer or the second elastomer under test is good.

### Embodiments E1-E8 And Comparative Examples C1 And C2

The ethylene propylene copolymer (EPDM), the plasticizer, and the modifier were sequentially added into an internal mixer (for example, a model X(S)M-50 internal mixer available from Wuxi Double Elephant Rubber & Plastics Machinery Co., Ltd.) in the conditions of "approximately 35°C and approximately 1 atm" according to the formulas listed in Table 2 (the values listed in the table are all based on weight percentages), the temperature was increased to 80°C, and then the second crosslinking agent was added for reaction for 1 hour, so as to obtain modified ethylene propylene copolymers (modified EPDMs) 1-8.

The components of the elastomer composition were added into the internal mixer for homogenous mixing in the conditions of "approximately 35°C and approximately 1 atm" by means of the method provided above and in accordance with the components and contents listed in Table 3 (the values listed in the table are all based on weight percentages); the resultant mixture was molded into a desired shape by means of extrusion, and then the first elastomer was obtained after crosslinking of the mixture.

The tensile strength, tear strength, and breakdown voltage of the first elastomer were respectively tested by means of the methods described above, and the test results are listed in Table 3.

**Table 2**

| | Modified EPDM1 | Modified EPDM2 | Modified EPDM3 | Modified EPDM4 | Modified EPDM5 | Modified EPDM6 | Modified EPDM7 | Modified EPDM8 |
|---|---|---|---|---|---|---|---|---|
| **EPDM** | 42.1 | 38.1 | 47.1 | 46.8 | 47.2 | 47.1 | 29.8 | 76.8 |
| **6110** | 21.1 | 19.1 | 23.6 | 23.5 | 23.6 | 23.6 | 0 | 0 |
| **RBB2210-30** | 31.6 | 38.1 | 23.5 | 23.4 | 23.5 | 23.5 | 59.4 | 0 |
| **A171** | 0 | 0 | 0 | 0 | 5.3 | 0 | 0 | 0 |
| **A151** | 0 | 0 | 0 | 0 | 0 | 0 | 6.6 | 0 |
| **KH570** | 4.7 | 4.3 | 5.3 | 5.2 | 0 | 5.2 | 0 | 0 |
| **BPO** | 0.5 | 0.1 | 0.6 | 1.1 | 0.6 | 0.6 | 4.2 | 14.6 |
| **Total** | 100 | 100 | 100 | 100 | 100 | 100 | 100 | 100 |

**Table 3**

| | **Embodiment E1** | **Embodiment E2** | **Embodiment E3** | **Embodiment E4** | **Embodiment E5** | **Embodiment E6** | **Embodiment E7** | **Embodiment E8** | **Comparative example C1** | **Comparative example C2** |
|---|---|---|---|---|---|---|---|---|---|---|
| **EPDM** | 0 | 0 | 0 | 0 | 0 | 0 | 0 | 0 | 16.8 | 8.4 |
| **Modified EPDM1** | 16.8 | 0 | 0 | 0 | 0 | 0 | 0 | 0 | 0 | 0 |
| **Modified EPDM2** | 0 | 16.8 | 0 | 0 | 0 | 0 | 0 | 0 | 0 | 0 |
| **Modified EPDM3** | 0 | 0 | 16.8 | 0 | 0 | 0 | 0 | 0 | 0 | 0 |
| **Modified EPDM4** | 0 | 0 | 0 | 16.8 | 0 | 0 | 0 | 0 | 0 | 0 |
| **Modified EPDM5** | 0 | 0 | 0 | 0 | 16.8 | 0 | 0 | 0 | 0 | 0 |
| **Modified EPDM6** | 0 | 0 | 0 | 0 | 0 | 16.8 | 0 | 0 | 0 | 0 |
| **Modified EPDM7** | 0 | 0 | 0 | 0 | 0 | 0 | 16.8 | | 0 | 0 |
| **Modified EPDM8** | 0 | 0 | 0 | 0 | 0 | 0 | 0 | 16.8 | 0 | 0 |
| **Hydroxyl-terminated silicone resin** | 39.2 | 39.2 | 39.2 | 39.2 | 39.2 | 39.2 | 39.2 | 16.8 | 39.2 | 39.2 |
| **CaCO3** | 31.4 | 31.4 | 31.4 | 31.4 | 31.4 | 31.4 | 31.4 | 52.8 | 31.4 | 31.4 |
| **Aerosil 8200** | 7.8 | 7.8 | 7.8 | 7.8 | 7.8 | 3 | 7.0 | 7.8 | 7.8 | 7.8 |
| **N550** | 1.2 | 1.2 | 1.2 | 1.2 | 1.2 | 1.2 | 1.2 | 1.2 | 1.2 | 1.2 |
| **D20** | 2.4 | 2.4 | 2.4 | 2.4 | 2.4 | 0.4 | 0.5 | 10 | 2.4 | 2.4 |
| **D62** | 1.2 | 1.2 | 1.2 | 1.2 | 1.2 | 8 | 0.2 | 5 | 1.2 | 1.2 |
| **6110** | 0 | 0 | 0 | 0 | 0 | 0 | 0 | 0 | 0 | 4.2 |
| **RBB2210-30** | 0 | 0 | 0 | 0 | 0 | 0 | 0 | 0 | 0 | 4.2 |
| **Total** | 100 | 100 | 100 | 100 | 100 | 100 | 100 | 100 | 100 | 100 |
| **Initial adhesion of non-crosslinked first elastomer composition** | 32 | 33 | 31 | 29 | 33 | 31 | 30 | 29 | 31 | 35 |
| **Breakdown voltage of first elastomer (Kv/mm)** | 21 | 21 | 22 | 23 | 21 | 23 | 24 | 24 | 22 | 19 |
| **Tensile strength of first elastomer (MPa)** | 2.1 | 2.3 | 1.8 | 2.2 | 1.9 | 2.0 | 1.8 | 1.3 | 1.2 | 1.1 |
| **Tear strength of first elastomer (N/mm)** | 11.6 | 12.1 | 11.2 | 12.0 | 10.8 | 11.6 | 10.8 | 9.6 | 6.5 | 6.3 |

It can be seen from Table 3 that the first elastomer provided by the present invention has desirable tensile strength, tear strength, and breakdown voltage.

It can be seen from comparative examples C 1 and C2 that both the tensile strength and the tear strength of the first elastomer prepared by using the ethylene propylene copolymer are lower than those of the first elastomer prepared by using the modified ethylene propylene copolymer.

### Embodiments E9-E15

The components of the elastomer composition were added into the internal mixer for mixing in the conditions of "approximately 35°C and approximately 1 atm" by means of the method provided above, in accordance with the components and contents listed in Table 4 (the values listed in the table are all based on weight percentages), and the first elastomer was obtained after crosslinking of the resultant mixture.

The tensile strength, tear strength, and breakdown voltage of the first elastomer were respectively tested by means of the methods described above, and the test results are listed in Table 4.

**Table 4**

| | **Embodiment E9** | **Embodiment E10** | **Embodiment E11** | **Embodiment E12** | **Embodiment E13** | **Embodiment E14** | **Embodiment E15** |
|---|---|---|---|---|---|---|---|
| **Modified EPDM2** | 5.6 | 11.2 | 22.4 | 29.2 | 44.8 | 16.8 | 16.8 |
| **Hydroxyl-terminated silicone resin** | 33.6 | 38 | 22.4 | 16.8 | 11.2 | 39.2 | 39.2 |
| **CaCO3** | 29 | 26 | 22 | 13 | 22 | 31.4 | 31.4 |
| **Aerosil 8200** | 7.8 | 7.8 | 3.8 | 6.4 | 2.4 | 7.8 | 7.8 |
| **N550** | 1.4 | 1.0 | 1.0 | 1.0 | 1.0 | 1.2 | 1.2 |
| **D20** | 6 | 14.8 | 1 | 0.6 | 0.6 | 2.4 | 2.4 |
| **D62** | 3 | 4 | 0.5 | 15.3 | 0.3 | 1.2 | 1.2 |
| **MQ silicone resin** | 0 | 0 | 0 | 0 | 0 | 2 | 19 |
| **Total** | 100 | 100 | 100 | 100 | 100 | 100 | 100 |
| **Initial adhesion of non-crosslinked first elastomer composition (mm)** | 50 | 28 | 85 | 108 | 160 | 21 | 16 |
| **Breakdown voltage of first elastomer (Kv/mm)** | 22 | 22 | 22 | 22 | 22 | 22 | 22 |
| **Tensile strength of first elastomer (MPa)** | 2.30 | 2.2 | 1.80 | 1.5 | 1.3 | 2.3 | 2.3 |
| **Tear strength of first elastomer (N/mm)** | 12.1 | 12.8 | 11.9 | 12.3 | 11.5 | 12.8 | 12.3 |

It can be seen from Table 4 that the first elastomer provided by the present invention has desirable tensile strength, tear strength, and breakdown voltage.

Furthermore, the addition of the MQ silicone resin can improve the initial adhesion of the non-crosslinked first elastomer composition.

### Embodiments E16-E21

The components of the elastomer composition were added into the internal mixer for mixing in the conditions of "approximately 35°C and approximately 1 atm" by means of the method provided above, in accordance with the components and contents listed in Table 5 (the values listed in the table are all based on weight percentages), and the intermediate of the second elastomer was obtained after crosslinking of the resultant mixture.

The intermediate of the second elastomer was placed in a blast drying oven in the conditions of "approximately 155°C and approximately 1 atm" for 7 days, so as to obtain the second elastomer.

The tensile strength, tear strength, breakdown voltage, and initial adhesion of the intermediate of the second elastomer, and the tensile strength, tear strength, and breakdown voltage of the second elastomer were respectively tested by means of the methods described above, and the test results are listed in Table 5.

**Table 5**

| | Embodiment E16 | Embodiment E17 | Embodiment E18 | Embodiment E19 | Embodiment E20 | Embodiment E21 |
|---|---|---|---|---|---|---|
| Modified EPDM2 | 16.8 | 5.6 | 1 | 3 | 30.2 | 40 |
| **Hydroxyl-terminated silicone resin** | 39.2 | 50 | 49.5 | 60 | 5.8 | 16 |
| **CaCO3** | 31.2 | 20.6 | 36.7 | 10.2 | 42.8 | 22 |
| **Aerosil 8200** | 7.8 | 12.8 | 7.8 | 21.8 | 2.4 | 2.2 |
| **N550** | 1.2 | 1.2 | 1.2 | 1.2 | 8.7 | 1.0 |
| **D20** | 2.4 | 2.4 | 2.4 | 2.4 | 0.6 | 0.6 |
| **D62** | 1.2 | 1.2 | 1.2 | 1.2 | 0.3 | 0.3 |
| **MQ silicone resin** | 0 | 0 | 0 | 0 | 0 | 0 |
| **BPO** | 0.2 | 6.2 | 0.2 | 0.2 | 9.2 | 0.2 |
| **Total** | 100 | 100 | 100 | 100 | 100 | 100 |
| **Initial adhesion of non-crosslinked second elastomer composition (mm)** | 28 | 21 | 26 | 15 | 108 | 90 |
| **Breakdown voltage of intermediate of second elastomer (Kv/mm)** | 22 | 22 | 22 | 22 | 22 | 22 |
| **Tensile strength of intermediate of second elastomer (MPa)** | 2.3 | 2.35 | 2.4 | 2.60 | 0.5 | 0.8 |
| **Tear strength of intermediate of second elastomer (N/mm)** | 12.3 | 8.2 | 6.8 | 7.9 | 9.3 | 11.8 |
| **Breakdown voltage of second elastomer (Kv/mm)** | 24 | 24 | 24 | 24 | 24 | 24 |
| **Tensile strength of second elastomer (MPa)** | 2.9 | 2.6 | 2.5 | 2.6 | 2.3 | 2.8 |
| **Tear strength of second elastomer (N/mm)** | 13.8 | 9.6 | 8.8 | 10.1 | 15.8 | 16.5 |

It can be seen from Table 5 that both the intermediate of the second elastomer and the second elastomer provided by the present invention have desirable tensile strength, tear strength, and breakdown voltages.

Furthermore, the tensile strength, tear strength, and breakdown voltage of the second elastomer are all better than the tensile strength, tear strength, and breakdown voltage of the intermediate of the second elastomer.

In addition, the addition of the MQ silicone resin can improve the initial adhesion of the non-crosslinked second elastomer composition.

In conclusion, the elastomer prepared from the elastomer composition provided by the present disclosure has good mechanical properties and electrical insulation properties.

Though the above particular embodiments comprise a great many concrete details for the purpose of illustration through specific examples, it is to be understand by those of ordinary skill in the art that, many variations, modifications, replacements and changes to these details shall all fall within the scope of the present invention as claimed in the claims. Therefore, the disclosure as described in the specific embodiments does not pose any limitation to the present invention as claimed in the claims. The proper scope of the present invention should be defined by the claims and proper legal equivalents thereof. All references referred to are incorporated herein by reference in their entireties.

## Claims

1. An elastomer composition, comprising, based on the total weight 100 wt.% of the elastomer composition:
1-50 wt.% of a modified ethylene propylene copolymer;
5-60 wt.% of a first silicone resin, the first silicone resin comprising at least one selected from the group consisting of the following:
a hydroxyl-terminated silicone resin and an alkoxy-terminated silicone resin;
0.1-15 wt.% of a first crosslinking agent;
0.1-15 wt.% of a catalyst; and
10-85 wt.% of a filler.

2. The elastomer composition according to claim 1, wherein the modified ethylene propylene copolymer having the following general formula: 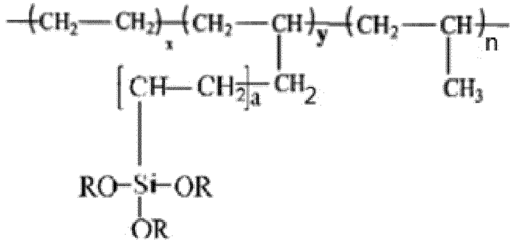 wherein each R respectively and independently represents one of the following substituted or unsubstituted groups, the groups comprising a C1-C12 alkyl group, a C2-C12 olefin, a C2-C12 alkynyl group, a C1-C12 alkoxy group, a C6-C12 aryl group, and a hydrogen atom, wherein x = 1-600000, y = 1-600000, n = 1-600000, and a = 1-30000;
or 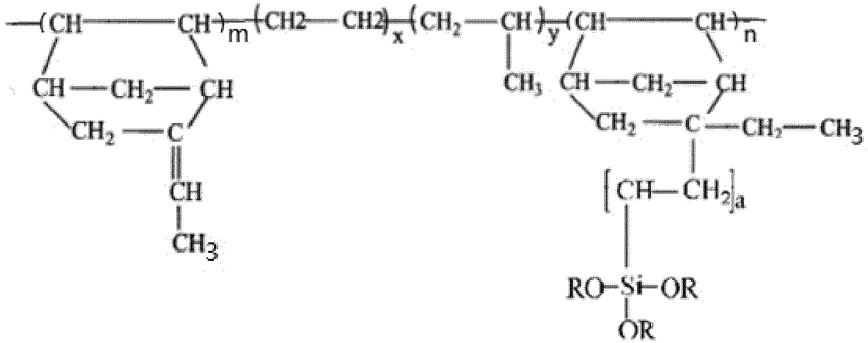 wherein each R respectively and independently represents one of the following substituted or unsubstituted groups, the groups comprising a C1-C12 alkyl group, a C2-C12 olefin, a C2-C12 alkynyl group, a C1-C12 alkoxy group, a C6-C12 aryl group, and a hydrogen atom, wherein x = 1-600000, y = 1-600000, m = 1-300000, n = 1-300000, and a = 1-30000;
or 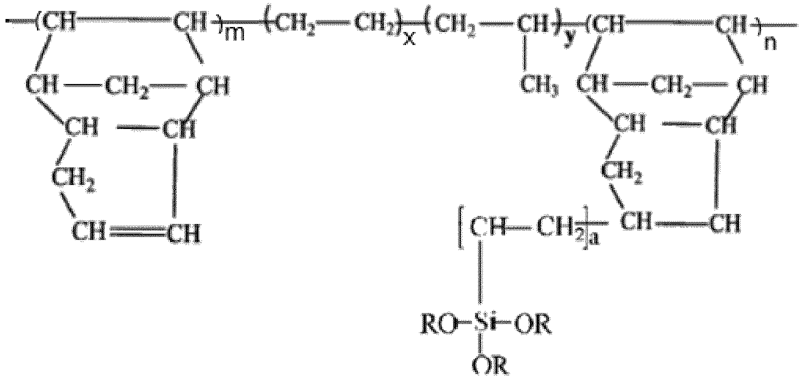 wherein each R respectively and independently represents one of the following substituted or unsubstituted groups, the groups comprising a C1-C12 alkyl group, a C2-C12 olefin, a C2-C12 alkynyl group, a C1-C12 alkoxy group, a C6-C12 aryl group, and a hydrogen atom, wherein x = 1-600000, y = 1-600000, m = 1-300000, n = 1-600000, and a = 1-30000;
or 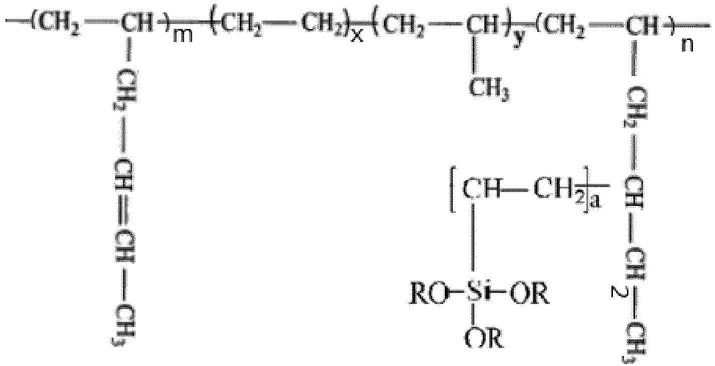 wherein each R respectively and independently represents one of the following substituted or unsubstituted groups, the groups comprising a C1-C12 alkyl group, a C2-C12 olefin, a C2-C12 alkynyl group, a C1-C12 alkoxy group, a C6-C12 aryl group, and a hydrogen atom, wherein x = 1-600000, y = 1-600000, n = 1-300000, and a = 1-30000.

3. The elastomer composition according to claim 1, wherein the modified ethylene propylene copolymer is a polymer obtained by means of graft modification of an ethylene propylene copolymer with a modifier; the ethylene propylene copolymer comprising at least one selected from the group consisting of the following: an ethylene propylene binary random copolymer, an ethylene propylene 1,1-ethylidene norbornene ternary random copolymer, an ethylene propylene dicyclopentadiene ternary random copolymer, and an ethylene propylene 1,4-hexadiene ternary random copolymer; the modifier comprising at least one selected from the group consisting of the following: vinyltrimethoxysilane, vinyltriethoxysilane, and γ-methacryloxypropyltrimethoxylsilane.

4. The elastomer composition according to claim 1, wherein the content of the modified ethylene propylene copolymer is 5-45 wt.%.

5. The elastomer composition according to claim 1, wherein the content of the first silicone resin is 10-50 wt.%.

6. The elastomer composition according to claim 1, wherein the first crosslinking agent comprises at least one selected from the group consisting of the following: methyltriacetoxysilane, methyltrimethoxysilane, tris(isopropenyloxy)vinylsilane, methyltris(methylethylketoxime)silane, vinyltrimethoxysilane, vinyltriethoxysilane, γ-(2,3-epoxypropoxy)propyltrimethoxysilane, aminopropyltriethoxysilane, N-(β-aminoethyl)-γ-aminopropylmethylbimethoxysilane, 3-(2,3-epoxypropoxy)propyltrimethoxysilane, γ-mercaptopropyltriethoxysilane, γ-mercaptopropyltrimethoxysilane, methyltriethoxysilane, tetramethoxysilane, tetrapropoxysilane, tetraethoxysilane, and triacetoxyethylsilane.

7. The elastomer composition according to claim 1, wherein the catalyst comprises at least one selected from the group consisting of the following: a titanium complex, dibutyltin diacetate, (triethoxysilylpropyl)tetramethylguanidine, dibutyltin dilaurate, and stannous octoate.

8. The elastomer composition according to claim 1, wherein the filler comprises at least one selected from the group consisting of the following: silica, diatomite, kaolin, montmorillonite, mica, wollastonite, iron oxide, titanium oxide, aluminum oxide, boron nitride, aluminum nitride, calcium carbonate, magnesium carbonate, zinc carbonate, asbestos, and fiberglass.

9. The elastomer composition according to claim 1, wherein the elastomer composition further comprises, based on the total weight 100 wt.% of the elastomer composition: 0.1-10 wt.% of a second crosslinking agent, the second crosslinking agent comprising at least one selected from the group consisting of the following: benzoyl peroxide, benzoyl tert-butyl peroxide, methyl ethyl ketone peroxide, dicumyl peroxide, bis(2,4-dichlorobenzoyl) peroxide, and 2,5-dimethyl-2,5-bis(*tert*-butylperoxy)hexane.

10. The elastomer composition according to claim 1, wherein the elastomer composition further comprises, based on the total weight 100 wt.% of the elastomer composition: 0.5-20 wt.% of a second silicone resin, the second silicone resin comprising an MQ silicone resin.

11. The elastomer composition according to claim 1, wherein the elastomer composition further comprises, based on the total weight 100 wt.% of the elastomer composition: 0.1-10 wt.% of a plasticizer, the plasticizer comprising at least one selected from the group consisting of the following: liquid polyisobutylene, liquid paraffin, naphthenic oil, and aromatic oil.

12. An elastomer, comprising crosslinking the elastomer composition according to any one of claims 1-11.

13. A method for preparing an elastomer, comprising a step of crosslinking the elastomer composition according to any one of claims 1-11.

14. An adhesive tape, comprising a backing and the elastomer according to claim 12 disposed at least at one side of the backing.

15. The adhesive tape according to claim 14, further comprising the elastomer according to claim 12 disposed at the other side of the backing.
